# EUROPEAN PATENT SPECIFICATION

(11) **EP 0 649 376 B1**
(45) Date of publication and mention of the grant of the patent: **28.05.1997**
(21) Application number: 93915762.4
(22) Date of filing: 01.07.1993
(51) Int. Cl.: B60R 16/06, H05F 3/00

(54) **DEVICE FOR PREVENTING FLASHOVERS**
VORRICHTUNG ZUR VERMEIDUNG VON UBERSCHLÄGEN
DISPOSITIF ANTI-DECHARGES ELECTROSTATIQUES

(30) Priority: 07.07.1992 IT PD920125
(43) Date of publication of application: 26.04.1995
(73) Proprietor: C.V.G. - CENTRO VENETO GALVANICO S.r.l., I-35010 Vigonza (IT); Fujita, Fumiaki, I-35131 Padova (IT)
(72) Inventor: FUJITA, Fumiaki, I-35131 Padova (IT)
(74) Representative: Cantaluppi, Stefano
(86) International application number: EP9301697
(87) International publication number: WO9401305

(56) References cited:
- EP-A- 0 391 263
- WO-A-87/07997
- AT-B- 352 823
- DE-A- 3 606 975
- US-A- 2 858 482
- US-A- 4 654 746

## Description

### Technical Field

This invention relates to a device for preventing electrostatic flashover between an object subjected to collect electric charges, specifically the car body of a vehicle, and a user thereof.

### Background Art

As is well known, vehicles are liable, e.g. as a result of the motion to which they are subjected in use, to build up electric charges of the electrostatic type. This phenomenon is specially manifest with motor cars, in particular on dry weather days and in winter, in the form of a flashover between the user and the vehicle as the former contacts a conductive portion of the latter.

Also known is that the extent of this phenomenon is tied to the presence of insulative materials that readily allow a potential difference to establish between two parts, as may be the user and the car body. The increased use of plastics materials, whose electrically insulating properties are well recognized, in the manufacture of modern motor vehicle parts and accessories has enhanced the phenomenon which, from an occasional occurrence tied to weather factors as above outlined, has grown to be frequent and widespread.

To mitigate the inconvenience caused to the user by such occurrence of high-potential, albeit low-current, flashovers, expedients have been studied, see EP-A-0391263, AT-B-352823, DE-A-3606975. WO-A-87/07997 and US-A-4654746 are also indicated as relevant.

These documents disclose specifically designed key devices which allow prevention of flashovers. However the devices of the prior art can not be adapted to normally existing keys.

### Disclosure of the Invention

The technical problem addressed by this invention is to provide a device conceived to overcome all of the drawbacks with which the above prior art is beset.

This problem is solved according to the invention by a device for preventing flashover between an object liable to have built up electric charges, in particular the body of a vehicle, and a user thereof, as claimed in the appended claims.

### Brief Description of Drawings

The invention will now be described in greater detail with reference to the accompanying drawings, in which:
Figure 1 is a diagram illustrating the method of this invention;
Figure 2 is a top plan view of a device as incorporated to a key for setting a vehicle to operate;
Figure 3 is a sectional view taken along line III-III through the device in Figure 2;
Figure 4 is a part-sectional top plan view of a variation of the device of the preceeding figures;
Figure 5 is a sectional view taken along line V-V in Figure 6 and showing the device of the preceeding figures;
Figure 6 is a sectional view taken along line VI-VI in Figure 5 and showing the same device; and
Figure 7 is a perspective view of a detail of the embodiment of the invention shown in Figures 5 and 6.

### Best Mode of Carrying Out the Invention

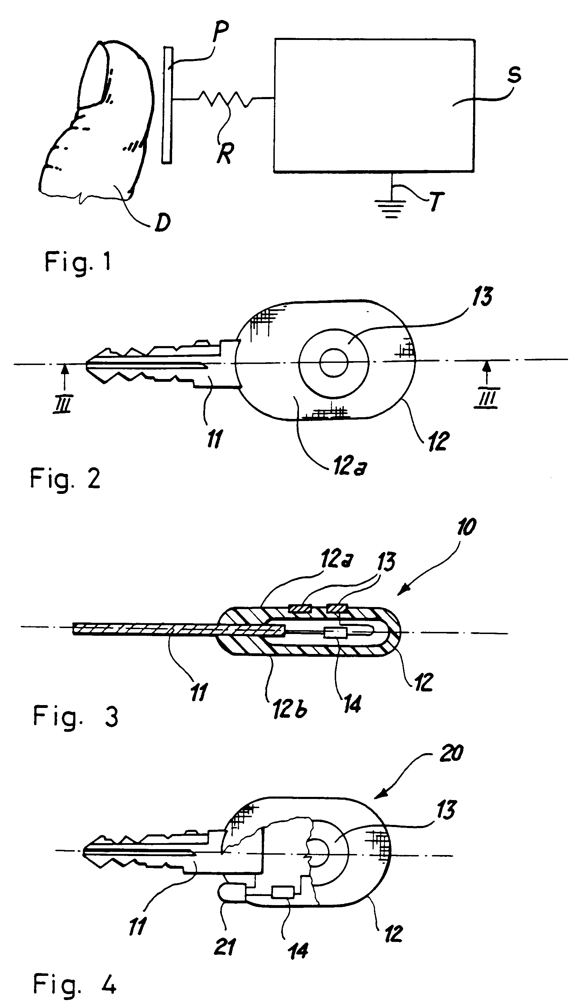

Shown schematically at S in Figure 1 is a motor car body or body of another vehicle, known per se, which may or may not be provided with a conventional sliding ground contact T. Shown at D is a finger or another part of a user's body that, after a trip on the vehicle having the car body S, is now temporarily at a different electric potential from the potential of the body S. Under this condition, should the user touch a conductive portion of the car body, a current will flow which usually results, due to the high value of the potential difference, in a flashover in the form of an electric arc.

Indicated at P is a conduction pole which is connected electrically to the car body S through a resistor R having a greater value than 0.2 Mohm, preferably a value in the 2 to 5 Mohm range.

Upon an electric contact being established, at least temporarily, between the finger D or another part of the user's body and the pole P, the current peak resulting from the potential difference relative to the car body S will be brought by the resistor R down to such a level as to eliminate any inconvenient effect to the user.

In a preferred embodiment, the device is incorporated to a key 10 for setting the vehicle to operate, such as the ignition key therefor and/or a key for unlocking the access doors to the car body S.

The key 10 includes a map portion 11 and an operation lug 12 of the same. The map portion is made of a metal material with electrically conductive properties, whereas the operation lug is generally molded from a plastics material or another insulating material. Note that the map portion of metal is embedded, with part of its length, in the operation lug, such that it will turn bodily with the latter. The operation lug is flattened and provided with two juxtaposed grip surfaces 12a,b.

The pole P comprises in this embodiment a metal disc 13 or another conductive element which comes out through one or both grip surfaces and is connected electrically to the map portion 11 through the resistor 14.

This arrangement is specially advantageous in that, each time that the user touches the pole 13 by grasping the operation lug in order to introduce and turn the key 10 into its keyhole for starting or stopping the vehicle engine, any potential difference between the user and the car body will be quietly discharged through the resistor 14.

Likewise, after the user gets off the vehicle and introduces the key into a corresponding keyhole on the car body, e.g. to lock the vehicle doors, any residual potential difference between the user and the car body will be quietly discharged, again through the resistor 14.

Shown in Figure 4 is a variation, generally designated 20, of the key in Figures 2 and 3. Similar parts are denoted by the same numerals as in the previous embodiment.

In the key 20, a gas discharge lamp 11, such as a neon lamp, is connected serially to the resistor 14 between the map portion 11 and the operation lug 12. The lamp 21 will go on when a current of suitable strength flows between the car body S and the user.

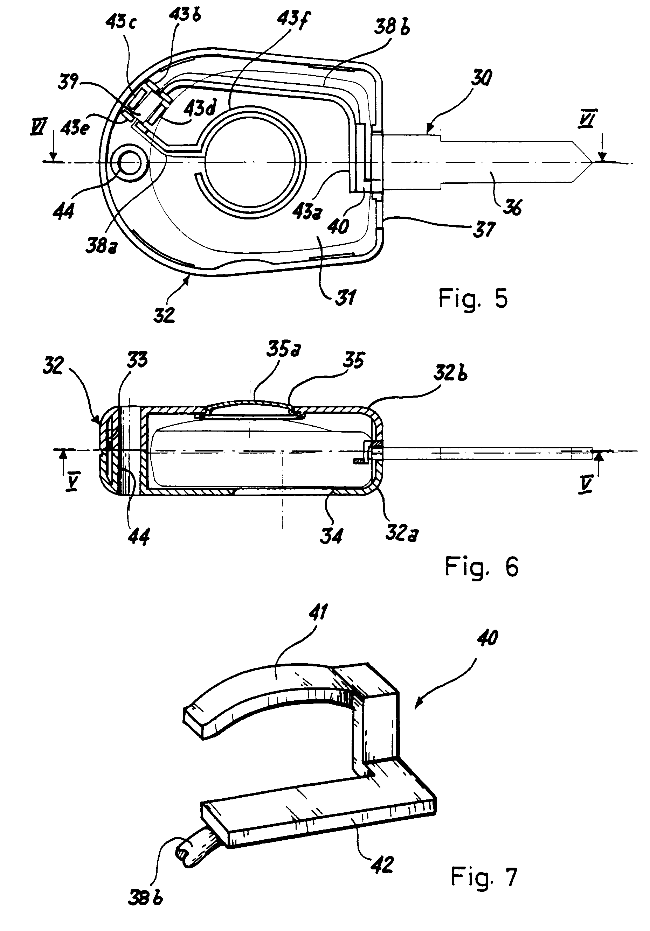

An embodiment of this invention is shown in Figures 5 and 6. Shown in these Figures is a car key 30 of conventional construction having its operation lug 31 received in a plastics molded shell 32.

The shell 32 is made up of two halves 32a, 32b which can be snap joined together through the provision of respective tooth-like lips 33 extending from one half-shell and engaging into corresponding sockets provided on the other half-shell. Each half-shell 32a,b includes a respective through-going opening 34, 35. The opening 34 is formed at a location, relative to the key 30, which is aligned to an optional pushbutton switch for operating an emergency light provided on the key alongside the map portion 36 thereof. Arranged in the shell 32 to accommodate this lamp is a hole 37. It is also envisaged that the pushbutton switch on the key may be used to control theft-prevention devices or the like.

The opening 35 is closed by an electrically conductive disc-shaped element 35a, such as a disc of metal to which either of the leads 38a,b connecting the electric resistor 39 to the map portion 36 of the key 30 is taken. The other lead, namely the one designated 38b, is connected to the map portion 36 by a clip 40 shown best in Figure 7. It should be noted that this clip has two legs 41, 42, essentially parallel, of which leg 41 is arcuate to enhance its elastic deformability, whilst leg 42 is essentially flat and acts as a soldering terminal for the lead 38b. Said legs 41, 42 straddle the map portion of the key and clamp around it.

Molded in the half-shell 32b are shallow projections 43a,b,c,d,e,f on the interior surface of the half-shell. The projections 43a and 43f act as protections and guides for the two leads 38a,b, whilst the projections 43b-e define a housing wherein the center body of the resistor 39 interfits. An optional cover (not shown) for this housing is formed at a corresponding location on the half-shell 32a so as to shut it when the half-shells are snapped together.

Note, lastly, that a tubular opening, generally shown at 44, is formed halfway in each of the two half-shells 32a,b. The opening 44 is for engagement by an optional keyholder.

The invention as described is open to many modifications and variations within the scope of the appended claims. As an example, the key may be replaced by another suitable object or accessory of the vehicle (e.g. a keyholder or the like) for electric connection, at least temporarily, to the car body through an electric resistor of appropriate value. Furthermore, the operation lug of the key may be formed from a plastics material made conductive with an appropriate electric resistance value, thereby the operation lug can constitute itself both the pole and the electric resistance for the purpose of the method and the device according to the invention.

## Claims

1. A device for preventing flashover between an object liable to have built up electric charges, in particular the body (S) of a vehicle, and a user thereof, said device comprising
- a key for setting the object to operate, said key having a map portion of conductive material and an operation lug,
- a pole (P,13,35a) connected to said map portion and adapted for connection, at least temporarily, to said object and said user,
- and a resistor (R,14,39) of predetermined value connecting said pole and said map portion of said key,
characterized in that said pole is mounted on a shell (32) fitting over said operation lug of said key as an additional covering thereof.

2. A device according to Claim 1, wherein said resistor has a greater value than 0.2 Megaohms.

3. A device according to Claim 1, wherein said resistor has a value within the range of 2 to 5 Megaohms.

4. A device according to Claim 1, wherein said pole (13) is formed on an operation lug (12) of said key (10) which is insulated electrically from said map portion (11).

5. A device according to Claim 4, wherein said resistor (14) is embedded in said operation lug (12) and said pole (13) is mounted at the location of at least one of the grip surfaces (12a,b) defined thereon.

6. A device according to Claim 1, wherein a light source (21) is arranged in series with said resistor (14) between said map portion (11) and said pole (13).

7. A device according to Claim 6, wherein said light source (21) comprises a gas discharge lamp.

8. A device according to Claim 1, wherein said shell comprises two half-shells (32a,b) snap joined to each other, said resistor (39) being enclosed by said shell.

9. A device according to any of the preceding claims, wherein the shell (32) includes an opening (34) which is aligned to an optional pushbutton switch on said operation lug of said key.

10. A device according to any of the preceding claims, wherein said shell includes a clip (40) for releaseably connecting said key map to said resistor, said clip including two essentially parallel legs (41, 42) adapted to straddle the map portion of the key and clamp around it.

## Patentansprüche

1. Vorrichtung zur Vermeidung von Überschlägen zwischen einem Objekt, welches dazu neigt, sich elektrisch aufzuladen, insbesondere der Karosserie (S) eines Fahrzeuges, und einem Benutzer des Objekts, wobei die Vorrichtung aufweist,
- einen Schlüssel zur Inbetriebnahme des Objekts, wobei der Schlüssel ein Funktionsteilstück aus leitfähigem Material und einen Betätigungsansatz hat,
- einen Pol (P, 13, 35a), der mit dem Funktionsteilstück verbunden und zur zumindest zeitweisen Verbindung mit dem Objekt und dem Benutzer ausgelegt ist, und
- einen Widerstand (R, 14, 39) von vorbestimmtem Wert, der den Pol und das Funktionsteilstück des Schlüssels verbindet,
dadurch **gekennzeichnet,**
daß der Pol auf einem Gehäuse (32) montiert ist, welches über den Betätigungsansatz des Schlüssels als eine zusätzliche Ummantelung desselben paßt.

2. Vorrichtung nach Anspruch 1,
dadurch **gekennzeichnet,**
daß der Widerstand einen größeren Wert als 0,2 Megaohm hat.

3. Vorrichtung nach Anspruch 1,
dadurch **gekennzeichnet,**
daß der Widerstand einen Wert im Bereich zwischen 2 und 5 Megaohm hat.

4. Vorrichtung nach Anspruch 1,
dadurch **gekennzeichnet,**
daß der Pol (13) auf einem Betätigungsansatz (12) des Schlüssels (10) gebildet ist, der von dem Funktionsteilstück (11) elektrisch isoliert ist.

5. Vorrichtung nach Anspruch 4,
dadurch **gekennzeichnet,**
daß der Widerstand (14) in dem Betätigungsansatz (12) eingebettet ist und der Pol (13) an der Position von mindestens einer der darauf definierten Grifflächen (12a, b) montiert ist.

6. Vorrichtung nach Anspruch 1,
dadurch **gekennzeichnet,**
daß eine Lichtquelle (21) in Reihe mit dem Widerstand (14) zwischen dem Funktionsteilstück (11) und dem Pol (13) angeordnet ist.

7. Vorrichtung nach Anspruch 6,
dadurch **gekennzeichnet,**
daß die Lichtquelle (21) eine Gasentladungslampe aufweist.

8. Vorrichtung nach Anspruch 1,
dadurch **gekennzeichnet,**
daß das Gehäuse zwei ineinander eingeschnappte Halbschalen (32a, b) aufweist, wobei der Widerstand (39) durch das Gehäuse eingeschlossen wird.

9. Vorrichtung nach einem der vorhergehenden Ansprüche,
dadurch **gekennzeichnet,**
daß das Gehäuse (32) eine Öffnung (34) enthält, welche auf einen wahlweise vorgesehenen Druckknopfschalter auf dem Betätigungsansatz des Schlüssels ausgerichtet ist.

10. Vorrichtung nach einem der vorhergehenden Ansprüche,
dadurch **gekennzeichnet,**
daß das Gehäuse eine Haltevorrichtung (40) zum lösbaren Verbinden des Schlüssel-Funktionsteilstücks mit dem Widerstand enthält, wobei die Haltevorrichtung zwei im wesentlichen parallele Füße (41, 42) enthält, welche so ausgebildet sind, daß sie das Funktionsteilstück des Schlüssels umspreizen und dieses umklammern.

## Revendications

1. Dispositif destiné à empêcher la formation d'une décharge de contournement en surface entre un objet susceptible d'avoir accumulé des charges électriques, en particulier la carrosserie (S) d'un véhicule, et un utilisateur de cet objet, le dispositif comprenant :
une clef servant à mettre l'objet en fonctionnement, ladite clef possédant une partie dotée d'un relief et faite d'une matière conductrice ainsi qu'une patte d'actionnement,
un pôle (P, 13, 35a) relié à ladite partie en relief et conçu pour réaliser la liaison, au moins temporaire, entre ledit objet et ledit utilisateur, et
une résistance (R, 14, 39) de valeur prédéterminée connectant ledit pôle et ladite partie en relief de ladite clef,
caractérisé en ce que ledit pôle est monté, sur une coquille (32) s'ajustant sur ladite patte d'actionnement de ladite clef comme un revêtement supplémentaire de celle-ci.

2. Dispositif selon la revendication 1, où ladite résistance possède une valeur dépassant 0,2 MΩ.

3. Dispositif selon la revendication 1, où ladite résistance possède une valeur comprise dans l'intervalle de 2 à 5 MΩ.

4. Dispositif selon la revendication 1, où ledit pôle (13) est formé sur une patte d'actionnement (12) de ladite clef (10), qui est électriquement isolée vis-à-vis de ladite partie en relief (11).

5. Dispositif selon la revendication 4, où ladite résistance (14) est encastrée dans ladite patte d'actionnement (12), et ledit pôle (13) est monté à l'emplacement d'au moins une des surfaces de saisie (12a, 12b) qui y sont définies.

6. Dispositif selon la revendication 1, où une source lumineuse (21) est disposée en série avec ladite résistance (14), entre ladite partie en relief (11) et ledit pôle (13).

7. Dispositif selon la revendication 6, où ladite source lumineuse (21) comprend une lampe à décharge à gaz.

8. Dispositif selon la revendication 1, où ladite coquille comprend deux demi-coquilles (32a, 32b) réunies l'une à l'autre par enclenchement brusque, ladite résistance (39) étant entourée par ladite coquille.

9. Dispositif selon l'une quelconque des revendications précédentes, où la coquille (32) comporte une ouverture (34) qui est alignée sur un commutateur à bouton-poussoir facultatif se trouvant sur ladite patte d'actionnement de ladite clef.

10. Dispositif selon l'une quelconque des revendications précédentes, où ladite coquille comporte une pince (40) servant à connecter, de manière libérable, ladite partie en relief de la clef à ladite résistance, ladite pince comportant deux branches sensiblement parallèles (41, 42) destinées à se trouver à cheval sur la partie en relief de la clef et à enserrer cette dernière.
